# EUROPEAN PATENT APPLICATION

(11) **EP 3 686 338 A1**
(43) Date of publication of application: **29.07.2020**
(21) Application number: 18856672.3
(22) Date of filing: 10.09.2018
(51) Int. Cl.: D06F 58/30, D06F 29/00, D06F 33/72, D06F 33/00, D06F 34/10

(54) **CLOTHING PROCESSING DEVICE AND CONTROL METHOD THEREFOR**

(30) Priority: 18.09.2017 CN 201710841378
(71) Applicant: Qingdao Haier Drum Washing Machine Co., Ltd., Shandong 266101 (CN)
(72) Inventor: LI, Wenwei, Qingdao Shandong 266101 (CN); WU, Jun, Qingdao Shandong 266101 (CN); WANG, Haibo, Qingdao Shandong 266101 (CN); WANG, Guangfeng, Qingdao Shandong 266101 (CN); WANG, Yubao, Qingdao Shandong 266101 (CN); PAN, Guanghui, Qingdao Shandong 266101 (CN)
(74) Representative: Beck & Rössig European Patent Attorneys
(86) International application number: PCT/CN2018/104761
(87) International publication number: WO 2019/052410

(57) **Abstract**

Disclosed are a clothing treating device and a control method therefor. The clothing treating device comprises at least one washing apparatus and at least one drying apparatus, wherein the washing apparatus comprises a water heater (5) for heating washing water, and the drying apparatus comprises a drying heater (6) for heating air entering the drying apparatus; when two or more heaters are working simultaneously, the total power thereof exceeds a bearing capacity of a power line; and when both a washing water heating program and a drying program need to be executed, the clothing treating device controls the water heater (5) and the drying heater (6), such that same do not work simultaneously, or adjusts the powers of the water heater (5) and the drying heater (6) so as to enable the two to work simultaneously. In this way, a user can give different heating control instructions at once or add different heating control instructions at any time, and the clothing treating device automatically controls the execution of the control instructions given by the user, thus ensuring the safe working of the clothing treating device within a rated power and ensuring the safety of the user.

## Description

### TECHNICAL FIELD

The disclosure relates to the technical field of clothing treating device, and particularly herein relates to a clothing treating device and control method therefor.

### BACKGROUND

With the improvement of the quality of life, people are more and more likely to pursue delicate life with high quality. Drying machine appears in more and more ordinary families and become an indispensable household appliance of high-quality life. In ordinary families, the drying machine is usually stacked on the washing machine, so as to form a simple stacked whole. The drying machine and the washing machine are respectively connected with a power line, and independent control systems are adopted by the two, which is inconvenient for users to use. The washing machine and the drying machine are stacked on the other, which does not form an integration, so that the user's experience is not as good as expected.

When the drying machine and the washing machine are integrated, the two use the same power line. The drying machine comprises a drying heater for heating air entering drying drum. The washing machine comprises a water heater for heating washing water. Both heaters are high-power electrical appliances. When both of them work at the same time, it is likely that the working power of the integrated machine will exceed the rated power. For example, the current of the power line is greater than the rated current, resulting in a great potential risk. Therefore, although the integrated machine has two heating processes, it is unsafe if the two heating processes are controlled to execute simultaneously, and there is a risk of fire.

However, it is unrealistic and unsafe to just remind users not to control the two heaters to heat at the same time. If the integrated machine only receives the instruction for one heater, when users need to heat washing water and dry clothes, they can only choose one of them. And they also need to input another control instruction after the program is completed, so that the control of the integrated machine is complicated and inconvenient.

In view of this, the disclosure is proposed.

### SUMMARY

The technical problem to be solved by the disclosure is to overcome the disadvantages of the prior art and provide a clothing treating device and control method therefor, so that a user can give different heating control instructions at once or add different heating control instructions at any time, and the clothing treating device automatically controls the execution of the control instructions given by the user. It ensures the safe working of the clothing treating device within a rated power, avoids that the total power exceeds the capacity of the power line when two or more heaters are working simultaneously, and ensures the safety of the user.

In order to solve the technical problem above, the basic idea of the technical scheme adopted by the disclosure is:
A control method of a clothing treating device which comprises at least one washing apparatus and at least one drying apparatus; the washing apparatus comprises a water heater for heating washing water, and the drying apparatus comprises a drying heater for heating air entering the drying apparatus; when both a washing water heating program and a drying program need to be executed, the clothing treating apparatus controls the water heater and the drying heater, such that same do not work simultaneously, or adjusts the powers of the water heater and the drying heater so as to enable the two to work simultaneously.

In the above scheme, it is realized that a user can give different heating control instructions at once or add different heating control instructions at any time, and the clothing treating device automatically controls the execution of the control instructions given by the user. It ensures the safe working of the clothing treating device within a rated power, avoids that the total power exceeds the capacity of the power line when two or more heaters are working simultaneously, and ensures the safety of the user. It should be noted that when both the washing water heating program and the drying program need to be executed means that the user choose to execute the washing water heating program and the drying program at the same time, or the clothing treating device receives the instruction from the user to execute one program during executing another program.

Preferably, the clothing treating device determines whether the set temperature of the washing water heating program is lower than the set temperature threshold, if so, the water heater is controlled to heat and the drying heater is controlled to heat after the heating process of the water heater finishes, otherwise the drying heater is controlled to heat in priority.

In the above scheme, whether the currently executed program is the washing water heating program or the drying program, when receiving another instruction, the drying machine first determines the set temperature of the washing water heating program. If the temperature is lower than a certain value, it means that it does not take long to heat the washing water. So, the washing water heating program can be executed in priority and the drying program is controlled to execute after the washing water heating program completes.

Preferably, the set temperature threshold is 30°C to 50°C, preferably, the set temperature threshold is 40°C.

The above set temperature threshold is obtained by the inventor through summing up a lot of experiments. Within the temperature range, the washing water heating program will complete rapidly in a short time, which is beneficial for starting and completing the washing process of the clothes as soon as possible.

Preferably, when the drying heater is controlled to heat in priority, the water heater is controlled to heat within the period when the heating of the drying heater is switched off.

In the above scheme, the water heater is controlled to heat within the period when the heating of the drying heater is switched off, so as to make full use of the time and complete the instruction from the user as soon as possible.

Preferably, when both the washing water heating program and the drying program need to be executed, the clothing treating device controls the water heater or the drying heater to heat in priority according to the execution time of the current program or the remaining execution time of the current program.

In the above scheme, if the execution time of the current program is relative long, the current program should continue to be executed. If the remaining execution time of the current program is relative long, the latest received instruction should be executed.

Preferably, the clothing treating device determines whether the execution time of the current program is longer than the set time threshold, if so, the current program is controlled to be executed in priority, otherwise the current program is terminated and the latest received instruction is executed.

Preferably, the set time threshold is a time value or a proportion of the total execution time of the current program.

Preferably, the set time thresholds of the washing water heating program and the drying program are different; the set time threshold of the washing water heating program is 2/3 to 4/5 of the total execution time of the washing water heating program, preferably 2/3 of the total execution time of the washing water heating program; the set time threshold of the drying program is 1/4 to 1/3 of the total execution time of the drying program, preferably 1/4 of the total execution time of the drying program.

Preferably, the clothing treating device determines whether the remaining execution time of the current program is shorter than the remaining time threshold, if so, the current program is controlled to be executed in priority, otherwise the current program is terminated and the latest received instruction is executed.

The remaining time thresholds of the washing water heating program and the drying program are different; the remaining time threshold of the washing water heating program is a time value, preferably 10 to 30 minutes, more preferably 20 minutes.

The above remaining time threshold is obtained by the inventor through summing up a lot of experiments. Within the remaining time range, the washing water heating program will complete rapidly in a short time, which is beneficial for starting and completing the washing process of the clothes as soon as possible.

Preferably, the remaining time threshold of the drying program is a proportion value, preferably the remaining time threshold of the drying program is 2/3 to 3/4 of the total execution time of the drying program, more preferably 3/4 of the total execution time of the drying program.

In the above scheme, the duration of the drying program is relative long, so the proportion value is preferred.

Preferably, when both the washing water heating program and the drying program need to be executed, the clothing treating device controls the heating process of the water heater with a duration of T1 and the heating process of the drying heater with a duration of T2 to be executed alternately.

In the above scheme, the washing water heating program and the drying program is controlled to be executed alternately, which is beneficial to complete the two programs at the same time.

Therein, T1 and T2 are both set values.

In the above scheme, T1 and T2 are both set values. The user can set the values manually, or the values are factory default settings.

Preferably, T1=T2.

Preferably, T1 and T2 are 2 to 10 minutes, more preferably, T1 and T2 are 5 minutes.

Another purpose of the disclosure is to provide a clothing treating device adopting the above control method. The clothing treating device comprises at least one washing apparatus and at least one drying apparatus; the washing apparatus comprises a water heater for heating washing water, and the drying apparatus comprises a drying heater for heating air entering the drying apparatus; the washing apparatus and the drying apparatus are powered by a same power line; the clothing treating device also comprises a control panel, both the water apparatus and the drying apparatus are connected with the control panel; the control panel controls the water heater and the drying heater, such that same do not work simultaneously, or adjusts the powers of the water heater and the drying heater so as to enable the two to work simultaneously.

In the above scheme, the control panel controls and coordinates the working of each heater, avoiding the clothing treating device from working at an excessive power when multiple heaters are working simultaneously. It avoids that the total power exceeds the capacity of the power line when two or more heaters are working simultaneously and ensures the safety of the user.

Preferably, a first power board is provided in each washing apparatus and a second power board is provided in each drying apparatus; the first power board comprises a control circuit for controlling the power on/off of the water heater, the second power board comprises a control circuit for controlling the power on/off of the drying heater; the control panel is respectively connected with each power board by a bus to control the connection and disconnection of the control circuit in each power board.

Preferably, the clothing treating device also comprises a main power board, the power line is connected with the main power board; each power board is respectively connected with the main power board, or the main power board is connected in series with each power board in turn to control the power on/off of each power board;
preferably, the main power board is one of the power boards.

After adopting the above technical scheme, the disclosure has the following beneficial effects compared with the prior art:
1. The clothing treating device of the disclosure comprises at least one washing apparatus and at least one drying apparatus. The washing apparatus comprises a water heater for heating washing water, and the drying apparatus comprises a drying heater for heating air entering the drying apparatus. When two or more heaters are working simultaneously, the total power thereof exceeds a bearing capacity of the power line. When both a washing water heating program and a drying program need to be executed, the clothing treating apparatus controls the water heater and the drying heater, such that same do not work simultaneously, or adjusts the powers of the water heater and the drying heater so as to enable the two to work simultaneously. Through adopting the above scheme, a user can give different heating control instructions at once or add different heating control instructions at any time. The clothing treating device automatically controls the execution of the control instructions given by the user, thus ensuring the safe working of the clothing treating device within a rated power and ensuring the safety of the user.
2. In the disclosure, each washing apparatus and drying apparatus are powered by the same power line. The clothing treating device also comprises a control panel, both the water apparatus and the drying apparatus are connected with the control panel. The control panel controls the water heater and the drying heater, such that same do not work simultaneously, or adjusts the powers of the water heater and the drying heater so as to enable the two to work simultaneously. The control panel controls and coordinates the working of each heater, avoiding the clothing treating device from working at an excessive power when multiple heaters are working simultaneously. It avoids that the total power exceeds the capacity of the power line when two or more heaters are working simultaneously and ensures the safety of the user.
3. In the disclosure, there are multiple schemes to coordinate the heating of the water heater and the drying heater. The users can choose the scheme they need according to the actual situation.

The implementation of the disclosure will be described in further detail with reference to the attached figures.

### BRIEF DESCRIPTION OF THE DRAWINGS

As a part of the disclosure, the attached drawings are used to provide a further understanding of the disclosure. The embodiments and descriptions of the disclosure are used to explain the disclosure and is not to be considered as improper limitation of the disclosure. Obviously, the following drawings are only some embodiments. For the person skilled in the art, other drawings can be obtained according to these drawings without any creative work. In the attached figures:
FIG. 1 is a diagram of the first implementation in embodiment 2 of the disclosure;
FIG. 2 is a diagram of the second implementation in embodiment 2 of the disclosure;
FIG. 3 is a diagram of the third implementation in embodiment 2 of the disclosure;
FIG. 4 is a diagram of the fourth implementation in embodiment 2 of the disclosure.

In the drawings: 1, control panel; 11, bus; 2, power board; 4, power line; 5, water heater; 6, drying heater.

It should be noted that these drawings and descriptions are not to limit the conception of the disclosure in any way, but to illustrate the concept of the disclosure for the person skilled in the art by referring to specific embodiments.

### DETAILED DESCRIPTION

The technical scheme in the following embodiments will then be described clearly and completely with combination with the attached figures in order to make the purpose, technical scheme and advantages of the disclosure clearer. The following embodiments are used to illustrate the disclosure but are not used to limit the scope of the disclosure.

In the following description, it should be noted that the terms "up", "down", "front", "back", "left", "right", "vertical", "inside", "outside" and etc. are based on the directions or positions shown in the attached figures. They are used to simplify the description, rather than to indicate that the device or element referred must have a specific direction or to be constructed or operated in a specific direction.

And in the following description, it should be understood that the terms "installment" and "connection" should be treated according to generalized understanding. For example, they can be understood as fixed connection, detachable connection or integrated connection. Also, they can mean mechanical connection or electrical connection. They can also represent direct connection or indirect connection. The person skilled in the art are able to understand the specific meaning of the above terms in the disclosure according to the specific situation.

### Embodiment 1

Embodiment 1 provides a control method of a clothing treating device. The clothing treating device comprises at least one washing apparatus and at least one drying apparatus. The washing apparatus comprises a water heater for heating washing water, and the drying apparatus comprises a drying heater for heating air entering the drying apparatus. When both a washing water heating program and a drying program need to be executed, the clothing treating apparatus controls the water heater and the drying heater, such that same do not work simultaneously, or adjusts the powers of the water heater and the drying heater so as to enable the two to work simultaneously.

In the above scheme, it is realized that a user can give different heating control instructions at once or add different heating control instructions at any time, and the clothing treating device automatically controls the execution of the control instructions given by the user. It ensures the safe working of the clothing treating device within a rated power, avoids that the total power exceeds the capacity of the power line when two or more heaters are working simultaneously, and ensures the safety of the user.

Preferably, the clothing treating device determines whether the set temperature of the washing water heating program is lower than the set temperature threshold, if so, the water heater is controlled to heat, and the drying heater is controlled to heat after the heating process of the water heater finishes, otherwise the drying heater is controlled to heat in priority.

In the above scheme, whether the currently executed program is the washing water heating program or the drying program, when receiving another instruction, the drying machine first determines the set temperature of the washing water heating program. If the temperature is lower than a certain value, it means that it does not take long to heat the washing water. So the washing water heating program can be executed in priority and the drying program is controlled to execute after the washing water heating program completes.

The set temperature threshold is 30°C to 50°C, preferably, the set temperature threshold is 40°C.

The above set temperature threshold is obtained by the inventor through summing up a lot of experiments. Within the temperature range, the washing water heating program will complete rapidly in a short time, which is beneficial for starting and completing the washing process of the clothes as soon as possible.

Preferably, when the drying heater is controlled to heat in priority, the water heater is controlled to heat within the period when the heating of the drying heater is switched off.

In the above scheme, the water heater is controlled to heat within the period when the heating of the drying heater is switched off, so as to make full use of the time and complete the instruction from the user as soon as possible.

Preferably, when both the washing water heating program and the drying program need to be executed, the clothing treating device controls the water heater or the drying heater to heat in priority according to the execution time of the current program or the remaining execution time of the current program.

In the above scheme, if the execution time of the current program is relative long, the current program should continue to be executed. If the remaining execution time of the current program is relative long, the latest received instruction should be executed.

Preferably, the clothing treating device determines whether the execution time of the current program is longer than the set time threshold, if so, the current program is controlled to be executed in priority, otherwise the current program is terminated and the latest received instruction is executed.

Preferably, the set time threshold is a time value or a proportion of the total execution time of the current program.

Preferably, the set time thresholds of the washing water heating program and the drying program are different; the set time threshold of the washing water heating program is 2/3 to 4/5 of the total execution time of the washing water heating program, preferably 2/3 of the total execution time of the washing water heating program; the set time threshold of the drying program is 1/4 to 1/3 of the total execution time of the drying program, preferably 1/4 of the total execution time of the drying program.

Preferably, the clothing treating device determines whether the remaining execution time of the current program is shorter than the remaining time threshold, if so, the current program is controlled to be executed in priority, otherwise the current program is stopped and the latest received instruction is executed.

The remaining time thresholds of the washing water heating program and the drying program are different; the remaining time threshold of the washing water heating program is a time value, preferably 10 to 30 minutes, more preferably 20 minutes.

The above remaining time threshold is obtained by the inventor through summing up a lot of experiments. Within the remaining time range, the washing water heating program will complete rapidly in a short time, which is beneficial for starting and completing the washing process of the clothes as soon as possible.

Preferably, the remaining time threshold of the drying program is a proportion value, preferably the remaining time threshold of the drying program is 2/3 to 3/4 of the total execution time of the drying program, more preferably 3/4 of the total execution time of the drying program.

In the above scheme, the duration of the drying program is relative long, so the proportion value is preferred.

Preferably, when both the washing water heating program and the drying program need to be executed, the clothing treating device controls the heating process of the water heater with a duration of T1 and the heating process of the drying heater with a duration of T2 to be executed alternately.

In the above scheme, the washing water heating program and the drying program is controlled to be executed alternately, which is beneficial to complete the two programs at the same time.

Therein, T1 and T2 are both set values.

In the above scheme, T1 and T2 are both set values. The user can set the values manually, or the values are factory default settings.

Preferably, T1=T2.

Preferably, T1 and T2 are 2 to 10 minutes, more preferably, T1 and T2 are 5 minutes.

Preferably, the priorities of the washing water heating program and the drying program are different. The clothing treating device executes the program with higher priority in priority.

In the above scheme, the clothing treating device is preset different priorities for different programs, for example, by user's setting or factory default setting. When the clothing treating device is executing the current program and receives the instruction for another program, the clothing treating device determines the priorities of the programs and the program with higher priority is controlled to be executed in priority.

There is also a more practical control method. When the clothing treating device receives the user's instruction to execute the washing water heating program and the drying program at the same time, the clothing treating device prompts the user to choose the program which will be execute in priority and execute the program according to the user's choice. When the clothing treating device is executing one program and receives the instruction to execute another program, the clothing treating device prompts the user to choose whether to execute the latest program in priority and execute the program according to the user's choice. Therein, the clothing treating device comprises a touch screen, and the touch screen inquiry the user's choice for the program with priority through a pop-up dialog box.

### Embodiment 2

Embodiment 2 provides a clothing treating device adopting the control method of embodiment 1. The clothing treating device comprises at least one washing apparatus and at least one drying apparatus. The washing apparatus comprises a water heater for heating washing water, and the drying apparatus comprises a drying heater for heating air entering the drying apparatus. The washing apparatus and the drying apparatus are powered by a same power line. The clothing treating device also comprises a control panel, both the water apparatus and the drying apparatus are connected with the control panel. The control panel controls the water heater and the drying heater, such that same do not work simultaneously, or adjusts the powers of the water heater and the drying heater so as to enable the two to work simultaneously.

In the above scheme, the control panel controls and coordinates the working of each heater, avoiding the clothing treating device from working at an excessive power when multiple heaters are working simultaneously. It avoids that the total power exceeds the capacity of the power line when two or more heaters are working simultaneously and ensures the safety of the user.

Preferably, a first power board is provided in each washing apparatus and a second power board is provided in each drying apparatus. The first power board comprises a control circuit for controlling the power on/off of the water heater, the second power board comprises a control circuit for controlling the power on/off of the drying heater. The control panel is respectively connected with each power board by a bus to control the connection and disconnection of the control circuit in each power board.

Preferably, the clothing treating device also comprises a main power board, the power line is connected with the main power board. Each power board is respectively connected with the main power board, or the main power board is connected in series with each power board in turn to control the power on/off of each power board.

Preferably, the main power board is one of the power boards.

Preferably, the control circuit of each power board comprises a control switch. The control switch controls the power on/off of the water heater or the drying heater.

Preferably, the control circuit of each power board also comprises a main switch. The main switch controls the power on/off of the control circuit.

Preferably, each switch is a single-pole double-throw relay or a double-pole double-throw relay.

Several implementations of the clothing treating device are as follows:

### The first implementation:

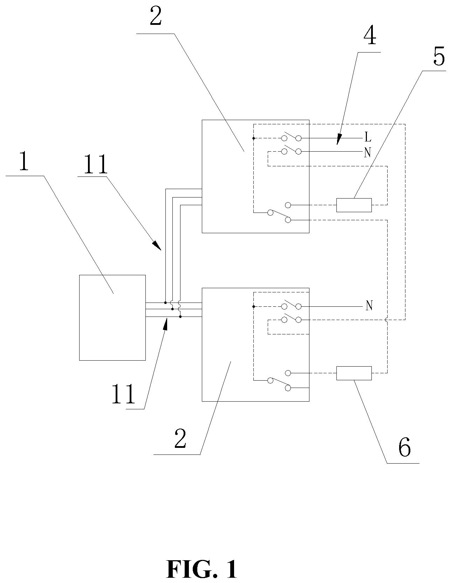

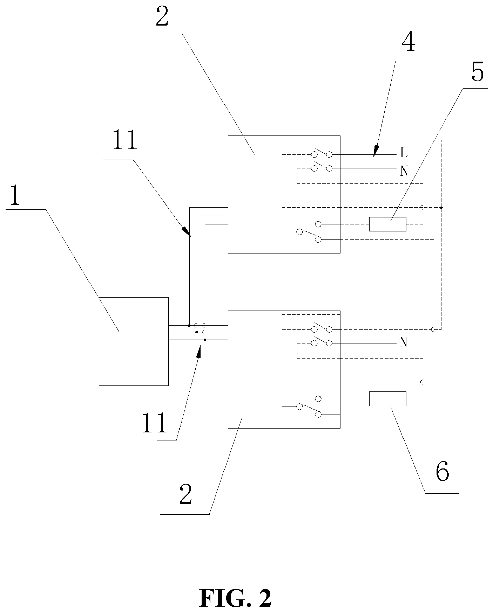

As illustrated in FIG. 1 and FIG. 2, a clothing treating device comprises a control panel 1 and several power boards 2 (two power boards are used as the example in the figures). The control panel 1 is electrical connected with each power board 2 respectively by a bus 11. Therein, the control panel of the washing apparatus (namely the first power board) is connected with a water heater, and the control panel of the drying apparatus (namely the second power board) is connected with a drying heater. One of the power boards is the main power board. Each washing apparatus and each drying apparatus of the clothing treating device are powered by a same power line 4. The power line 4 is connected with the main power board. At least one mian relay is provided in each power board 2.

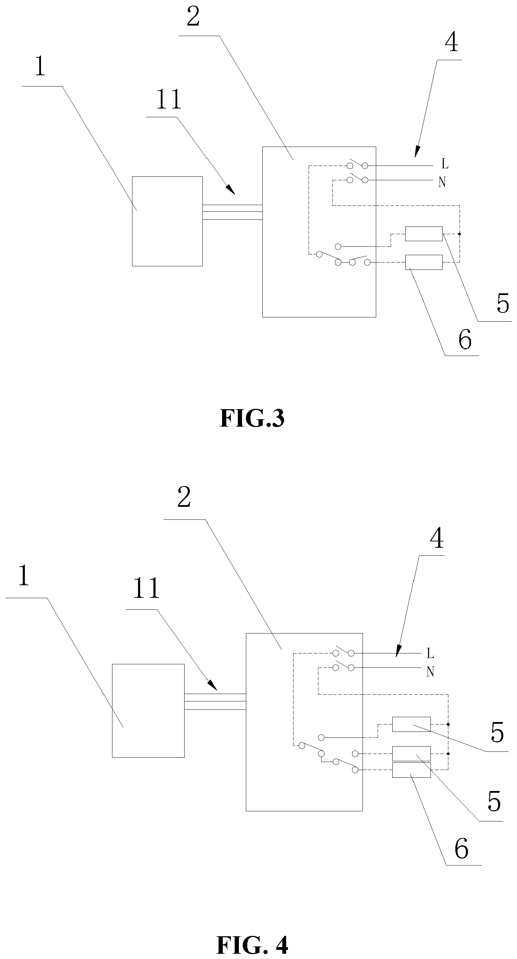

Another implementation is as illustrated in FIG. 3 and FIG. 4. The clothing treating device comprises a control panel 1 and a power board 2, and the control panel 1 and the power board 2 is electrical connected by a bus 11. Each washing apparatus and each drying apparatus of the clothing treating device are powered by a same power line 4, and the power line 4 is connected with the power board 2. The power board 2 is electrical connected with a water heater 5 and a drying heater 6. A control circuit is provided in the power board 2 to control the power on/off of the water heater and the drying heater. At least one switch is provided in the power board 2 to control the heating of each heater. The switch is a a single-pole double-throw relay, a double-pole double-throw relay or a single-pole single-throw relay. Or, the heating process of the water heater or the drying heater is controlled by the combination of the above kinds of relays.

The above description is just used to illustrate some more practical embodiments of the disclosure but is not the limitation of the disclosure in any way. Although the disclosure has been enclosed as the above embodiments, they are not used to limit the disclosure. Within the technical scheme of the disclosure, any person skilled in the art should be able to make some changes or modifications based on the above techniques to obtain other embodiments with equal benefits. But any simple changes, equivalent changes or modifications, made to the above embodiments according to the technical substance within the technical scheme of the disclosure, still belong to the protection range of the disclosure.

## Claims

1. A control method of a laundry treating device comprising a washing apparatus and a drying apparatus, wherein, the water heater is used for heating washing water, and the drying heater is used for heating air entering the drying apparatus; **characterized in that**:
the method comprises when both a washing water heating program and a drying program need to be executed, the clothing processing device controls the water heater and the drying heater not work to simultaneously, or the clothing processing apparatus adjusts powers of the water heater and the drying heater so as to enable to work simultaneously.

2. The control method according to claim 1, **characterized in that**: the clothing treating device determines whether a set temperature of the washing water heating program is lower than a set temperature threshold,
if yes, the clothing treating device controls the water heater to heat, and then controls the drying heater to heat after the washing water heating program finishes, otherwise the clothing treating device controls the drying heater to heat in priority;
the set temperature threshold is 30 ° C to 50 ° C, preferably, the set temperature threshold is 40 ° C;
preferably, if the clothing treating device controls the drying heater to heat in priority, the clothing treating device controls the water heater to heat within a period when the drying heater is off.

3. The control method according to claim 1, **characterized in that**: when both the washing water heating program and the drying program are executed, the clothing treating device controls the water heater or the drying heater to heat in priority according to an executed time of a current program or a remaining execution time of the current program.

4. The control method according to claim 3, **characterized in that**: the clothing treating device determines whether the execution time of the current program is longer than a set time threshold,
if yes, the current program is controlled to be executed in priority, otherwise the current program is terminated and a latest instruction received is executed.

5. The control method according to claim 4, **characterized in that**: the set time threshold is a time value or a proportion of a total execution time of the current program;
preferably, set time thresholds of the washing water heating program and the drying program are different; the set time threshold of the washing water heating program is 2/3 to 4/5 of a total execution time of the washing water heating program, preferably 2/3 of the total execution time of the washing water heating program;
the set time threshold of the drying program is 1/4 to 1/3 of a total execution time of the drying program, preferably 1/4 of the total execution time of the drying program.

6. The control method according to claim 3, **characterized in that**: the clothing treating device determines whether the remaining execution time of the current program is shorter than a remaining time threshold, if yes, the current program is controlled to be executed in priority, otherwise the current program is terminated and a latest instruction received is executed;
remaining time thresholds of the washing water heating program and the drying program are different; the remaining time threshold of the washing water heating program is a time value, preferably 10 to 30 minutes, more preferably 20 minutes;
the remaining time threshold of the drying program is a proportion value, preferably the remaining time threshold of the drying program is 2/3 to 3/4 of a total execution time of the drying program, more preferably 3/4 of the total execution time of the drying program.

7. The control method according to claim 1, **characterized in that**: when both the washing water heating program and the drying program are executed, the clothing treating device controls to perform alternately a heating process with a duration of T 1 by the water heater and a heating process with a duration of T2 by the drying heater;
therein, T1 and T2 are both set values, preferably, T1=T2;
preferably, T1 and T2 are 2 to 10 minutes, more preferably, T1 and T2 are 5 minutes.

8. A clothing treating device adopting the control method according to any one of claims from 1 to 7, comprising at least a washing apparatus, a drying apparatus and a control panel, **characterized in that**:
the washing apparatus comprises a water heater for heating washing water, and the drying apparatus comprises a drying heater for heating air entering the drying apparatus; the washing apparatus and the drying apparatus are powered by a same power line;
the water apparatus and the drying apparatus are connected with the control panel; the control panel controls the water heater and the drying heater not to work simultaneously, or the control panel adjusts powers of the water heater and the drying heater so as to enable to work simultaneously.

9. The clothing treating device according to claim 8, **characterized in that**: a first power board is provided on the washing apparatus and a second power board is provided on the drying apparatus; the first power board comprises a control circuit for controlling power on/off of the water heater, the second power board comprises a control circuit for controlling power on/off of the drying heater; the control panel is respectively connected with each power board by a bus to control a connection and disconnection of the control circuit in each power board.

10. The clothing treating device according to claim 9, **characterized in that**: the clothing treating device comprises a main power board, the power line is connected with the main power board; each power board is respectively connected with the main power board, or the main power board is connected in series with each power board to control power on/off of each power board;
preferably, the main power board is one of the power boards.
